# EUROPEAN PATENT APPLICATION

(11) **EP 2 692 937 A1**
(43) Date of publication of application: **05.02.2014**
(21) Application number: 12178490.4
(22) Date of filing: 30.07.2012
(51) Int. Cl.: D06F 39/00

(54) **Washing machine**

(71) Applicant: Electrolux Home Products Corporation N.V., 1130 Brussel (BE)
(72) Inventor: Cavarretta, Francesco, 33080 Porcia (PN) (IT); Vignocchi, Massimiliano, 33080 Porcia (PN) (IT)
(74) Representative: Nardoni, Andrea

(57) **Abstract**

Wasing machine (1) comprising
- a chamber (10) for receiving goods to be washed,
- a tank (30) adapted to contain a liquid,
- a heat pump (20) comprising a first heat exchanger (22), a second heat exchanger (24), a compressor (26) and a pressure lowering device (28) forming a circuit comprising a heat transfer fluid, the first heat exchanger (22) being adapted to cool said heat transfer fluid and to heat water to be used in the chamber (10), the second heat exchanger (24) being adapted to heat said heat transfer fluid and to cool the liquid contained in the tank (30),
characterized in that the tank (30) is fluidly connected to water mains (40) by means of a conduit configured so as to supply tap water from the water mains (40) to the tank (30) bypassing the chamber (10).

## Description

The present invention relates to a washing machine for washing goods as, for example, a dish washing machine or a laundry washing machine.

In the present application the washing machine can be a washing machine or a washing-drying machine (i.e. a washing machine which can both wash and dry the goods).

In a washing machine, it is known to use an electric heater to heat water in a washing chamber.

In order to save energy consumption, it is also known to use a heat pump in place of or besides the electric heater for heating the water.

EP 2 096 203 discloses a household washing machine comprising a tub, a heater and a container. The container contains waste water (i.e. used process water) of a previous process phase (e.g., washing or rinsing phase). The household washing machine also comprises a heat pump comprising an evaporator thermally coupled to the container, a condenser, a compressor and an expansion valve. A heat pump medium is pumped from the compressor to the condenser, where liquefaction takes place accompanied by release of heat. The released heat is used to warm process water contained in the tub. From the condenser the medium passes via the expansion valve to the evaporator where the medium evaporates whilst absorbing heat from the waste water contained in the container. From the evaporator the medium runs back to the compressor. At the end of each process phase, the waste water is drained away from the tub into a waste water line via the container wherein the cooled waste water is replaced.

EP 2 224 049 discloses a cleaning device comprising a tub, a waste water tank for intermediate storage of waste water from the tub, a heat pump for extracting heat from the waste water tank and supplying it to process water in the tub, and a controller configured to partially freeze the waste water in the waste water tank and to melt at least part of the ice located in the waste water tank by supplying process water from the tub towards the end of a washing process.

EP 2 206 824 discloses a household appliance comprising a tub, a tank filled with liquid and a heat pump for extracting heat from the liquid contained in the tank and supplying the heat to the tub. The tank is a closed tank whose content is not changed within the framework of the normal process carried out by the household appliance. EP 2 206 824 states that a heat exchanger can be provided between a waste water line and the tank in order to transfer heat from the waste water into the liquid tank.

The Applicant observes that during operation of the heat pump, the liquid in the tank is cooled down with respect to a starting temperature and, optionally, at least partially iced. The cooled/iced liquid needs to be regenerated, that is warmed up again towards the starting temperature, in order to be used again for a next, optionally immediately subsequent, process cycle. In case of ice generation, it is preferable that all the ice is melted before the next process cycle is started.

EP 2 096 203 and EP 2 224 049 disclose to use waste water of of a previous process phase to replace the cooled waste water in the tank. However, as waste water is used, dirt deposition and/or bacteria proliferation can occur in the tank.

In order to avoid contamination of the tank with deposits from waste water from the tub, EP 2 206 824 discloses to use a closed tank and a heat exchanger between a waste water line and the closed tank in order to transfer heat from the waste water into the liquid contained in the tank.

However, the Applicant observes that this solution provides low performances in terms of cooled/iced liquid regeneration in the tank.

In particular, with respect to the solution wherein the cooled/iced liquid is regenerated by replacement with waste water from a previous process phase, this solution might take longer time to regenerate the cooled/iced liquid and might not be able to guarantee full regeneration.

It is an object of the invention to provide an alternative washing machine with a heat pump.

It is a further object of the invention to provide a washing machine with a heat pump that has an efficient cooled/iced liquid regeneration in the tank.

It is another object of the invention to provide an improved washing machine with a heat pump that has improved design and construction, high reliability and long lifetime.

The Applicant found that the above objects are achieved by a washing machine comprising a chamber for receiving goods to be washed and a heat pump associated with a liquid tank which is fluidly connected to water mains by means of a conduit that bypasses the chamber.

The use of a liquid tank which is directly fluidly connected to water mains, that is by means of a conduit that bypasses the chamber, enables to regenerate cooled/iced liquid in the tank by replacement with clean tap water.

This enables to improve the efficiency of cooled/iced liquid regeneration with respect to the closed tank solution described by EP 2 206 824.

In addition, with respect to the solution discosed by EP 2 096 203 and EP 2 224 049 making use of waste water from the tub, the use of a liquid tank which is directly fluidly connected to the water mains avoids the risk of contamination with deposits and/or bacteria from waste water. This enable to improve the reliability of the washing machine and to lengthen its lifetime.

Furthermore, the liquid tank which is directly fluidly connected to water mains enables to perform the regeneration of cooled/iced liquid in the tank during operation of the heat pump, and not only at the end of a process cycle of the washing mashine by using waste water coming from said process cycle. This is advantageous because it enables to provide the tank with new "warm water" (that is tap water having a higher temperature than that of the cooled/iced liquid in the tank) that acts as new energy source for the heat pump, during operation of the heat pump.

Therefore, in some advantageous embodiments of the present invention, the heat pump efficiency is further increased and store of ice in the tank is reduced. In addition, the size of the tank can be reduced, thereby improving the design and construction of the washing machine. Furthermore, by performing cooled/iced liquid regeneration in the tank during operation of the heat pump, it is possible to perform subsequent heat pump operation cycles, one immediately after the other. Moreover, if needed, reduction of ice storage in the tank may enable to perform longer heat pump operation cycles.

Accordingly, in a first aspect the present invention relates to a washing machine comprising:
- a chamber for receiving goods to be washed,
- a tank adapted to contain a liquid,
- a heat pump comprising a first heat exchanger, a second heat exchanger, a compressor and a pressure lowering device forming a circuit comprising a heat transfer fluid, the first heat exchanger being adapted to cool said heat transfer fluid and to heat water to be used in the chamber, the second heat exchanger being adapted to heat said heat transfer fluid and to cool the liquid contained in the tank ,
**characterized in that** the tank is fluidly connected to water mains by means of a conduit configured so as to supply tap water from the water mains to the tank bypassing the chamber.

The second heat exchanger is advantageously thermally coupled to the tank.

In an embodiment, the second heat exchanger can be arranged within the tank.

In a preferred embodiment, the first heat exchanger comprises a tube arrangement adapted to deliver heat.

In a preferred embodiment, the second heat exchanger comprises a tube arrangement adapted to aborb heat.

In an embodiment, the heat transfer fluid is a refrigerant adapted to condense inside the first heat exchanger and to evaporate inside the second heat exchanger.

In this embodiment, the first heat exchanger is a condenser and the second heat exchanger is an evaporator.

In another embodiment, the heat transfer fluid can be a refrigerant that operate non-conventional cycles, as for instance carbon dioxide, that do not undergo a phase change (i.e., condensation and evaporation) in the first heat exchanger and second heat exchanger.

The heat transfer fluid is advantageously circulated through said circuit.

Suitably, said circuit is closed recirculation circuit.

The first heat exchanger is advantageously thermally coupled to the water to be used in the chamber.

In an embodiment, the first heat exchanger is thermally coupled to the chamber. For example, the first heat exchanger can be arranged inside the chamber, preferably on the bottom of the chamber.

In another embodiment, the first heat exchanger is thermally coupled to a water circuit conducting the water into the chamber.

In an embodiment, the water circuit is a recirculation circuit adapted to drain water from the chamber and to return it back into the chamber at another location. Suitably, the recirculation circuit comprises a pump and a pipe arrangement. In this embodiment, the first heat exchanger can be thermally connected to the pump and/or the pipe arrangement. This solution, enables to recirculate the water through the recirculation circuit, which is thermally coupled to the first heat exchanger, till a desired process temperature is reached.

In another embodiment, the first heat exchanger is thermally coupled to a water circuit adapted to draw water directly from the water mains, bypassing the chamber, and to deliver it into the chamber (without recirculation). In this embodiment, the tap water from water mains is heated by the first heat exchanger before entering the chamber. The first heat exchanger thus operates only on contact with tap water.

Advantageously, the tank has an input fluidly connected to the water mains by means of said conduit.

Suitably, the washing machine comprises a water outlet circuit for discharging waste water (i.e. used water) from the chamber. The water outlet circuit is advantageously fluidly connected to the bottom of the chamber.

The water outlet circuit can comprise a draining pump and draining pipes, adapted for discharging waste water from the chamber after process cycles (e.g. washing, rinsing cycles).

Advantageously, the tank has an output for draining away at least part of cooled liquid from the tank.

Advantageously, the output of the tank is fluidly connected to the water outlet circuit in order to drain away at least part of cooled liquid from the tank via the water outlet circuit.

According to another embodiment, the output of the tank is fluidly connected to a dedicated liquid outlet circuit (that is to a liquid outlet circuit free of fluid connection with the water outlet circuit).

According to an embodiment, the tank is thermally coupled to the water outlet circuit (e.g. to said draining pump and/or to said draining pipes). This advantageously enables to transfer heat from the waste water flowing through the water outlet circuit to the liquid contained in the tank thereby improving regeneration of the cooled/iced liquid in the tank. The thermal coupling can be achieved, for example, by means of a heat exchanger, as for example by placing the draining pipes in contact with the tank.

The washing machine suitably comprises a control unit. The control unit is advantageously configured in order to control operation of the washing machine.

The control unit is advantageously configured to manage regeneration of the liquid in the tank, cooled/iced during operation of the heat pump. Suitably, the control unit is configured to manage entry of tap water from the water mains into the tank and exit of at least part of the liquid cooled by the second heat exchanger. This, with the purpose of melting any ice formation in the tank and at least partially replacing cooled liquid in the tank with tap water at a higher temperature.

The fluid connection to water mains can include connection to cold water tap and/or hot water tap so as to supply to the tank "cold" tap water (that is at ambient temperature, for example from about 15 to 20 °C) or hot tap water (for example, from about 30 to 50 °C). Connection to hot water tap can advantageously increase the heat pump efficiency.

In case of connection to hot water tap, the control unit can be advantageously configured so as to guarantee that liquid regeneration is performed by hot water at a given hot temperature. This can be achieved by managing tap water entry/exit into/from the tank for a predetermined time or by monitoring the tap water temperature, taking into account that a predetermined time is needed for the water coming from the hot water tap to reach a desired hot temperature.

According to a preferred embodiment, the control unit is configured to manage cooled/iced liquid regeneration in the tank so that liquid regeneration is performed during operation of the heat pump (that is when the heat pump and, in particular, the compressor is switched on). As stated above, this is advantageous because it enables to improve the heat pump efficiency, to reduce ice formation and to reduce the size of the tank. In addition, by eliminating the need of performing cooled/iced liquid regeneration after the heat pump is switched off, it enables to perform subsequent heat pump operation cycles, one immediately after the other. Moreover, if needed, reduction of ice formation in the tank may enable to perform longer heat pump operation cycles.

The control unit can be configured to carry out cooled/iced liquid regeneration in the tank once or more times during a same operation cycle of the heat pump.

The control unit can be configured so that cooled/iced liquid regeneration is performed during operation of the heat pump, at an intermediate time between a starting time and an ending time of the operation of the heat pump 20. Said intermediate time can be predefined by the washine machine manufacturer or can be identified in cooperation with a suitable sensor. For example, said intermediate time can correspond to a predetermined degree of ice formation in the tank.

In addition or in alternative, the control unit can be configured to manage cooled/iced liquid regeneration in the tank so that cooled/iced liquid regeneration is performed when the heat pump is switched off.

In a preferred embodiment, the control unit is configured to operate the heat pump so that the liquid in the tank is at least partially freezed. In this way, the latent heat of the phase transition from liquid to solid is advantageously used and the heat pump efficiency is improved.

The washing machine can be a dish washing machine or a laundry washing machine.

According to an embodiment, the washing machine can be a washing-drying machine for both washing and drying goods.

In a further aspect the present invention relates to a method of liquid regeneration in a washing machine comprising a chamber for receiving goods to be washed, a liquid tank, and a heat pump comprising a first heat exchanger, a second heat exchanger, a compressor and a pressure lowering device forming a circuit comprising a heat transfer fluid, the method comprising:
- operating the heat pump so as to cool said heat transfer fluid and to heat water to be used in the chamber by means of said first heat exchanger, and to heat said heat transfer fluid and to cool the liquid contained in the tank by means of the second heat exchanger,
- regenerating the liquid contained in the tank, cooled during operation of the heat pump, by supplying tap water from water mains to the tank bypassing the chamber.

Advantageously, regenerating the liquid contained in the tank comprises draining away at least part of the cooled liquid. Draining away at least part of the cooled liquid from the tank can be performed when tap water is supplied to the tank from water mains. According to another embodiment, draining away at least part of the cooled liquid from the tank can be performed when the liquid level in the tank reaches a predetermined value.

Suitably, operating the heat pump is performed by switching the compressor on.

Suitably, the heat pump (that is, the compressor) is switched off at the end of an operation cycle of the heat pump.

Suitably, the heat pump (that is, the compressor) is operated (that is, switched-on) again for performing another operation cycle of the heat pump.

Advantageously, the heat pump is operated till a desired temperature is reached for the water to be used in the chamber. Thereafter, the heat pump (that is, the compressor) is switched off.

According to an embodiment, the heat pump is operated till the liquid in the tank reaches a predetermined condition (for example a predetermined degree of ice formation in the tank). Thereafter, the heat pump (that is, the compressor) is switched off. In this connection it is observed that ice formation in the tank can be reduced and heat pump operation times can be increased by performing liquid regeneration while the heat pump is switched on.

According to an embodiment, the heat pump is operated for a predetermined operation time. Thereafter, the heat pump (that is, the compressor) is switched off.

Advantageously, the heat pump is operated till a first one of at least two of the above conditions (desired temperature reached for the water to be used in the chamber, predetermined condition reached for the liquid in the tank and end of predetermined operation time) is met.

In a preferred embodiment, regeneration of the liquid is performed while operating the heat pump, that is while the compressor is switched-on.

Regeneration of the liquid during operation of the heat pump can be carried out once or more times during a same operation cycle of the heat pump.

In addition or in alternative, regeneration of the liquid can be performed while the heat pump is switched off, that is while the compressor is switched-off, for example during laundry rinsing, laundry spinning or laundry washing (in the latter case, after the desired temperature is reached for the water to be used in the chamber).

Features and advantages of the present invention will be more readily understood from the from the following detailed description of some preferred embodiments thereof, which is given below by way of non-limiting example with reference to the accompanying drawings, in which:
- figure 1 schematically shows a washing machine according to the invention;
- figure 2 schematically shows an embodiment of the washing machine of figure 1;
- figure 3 schematically shows another embodiment of the washing machine of figure 1.

Like elements are denoted by like reference signs throughout the figures.

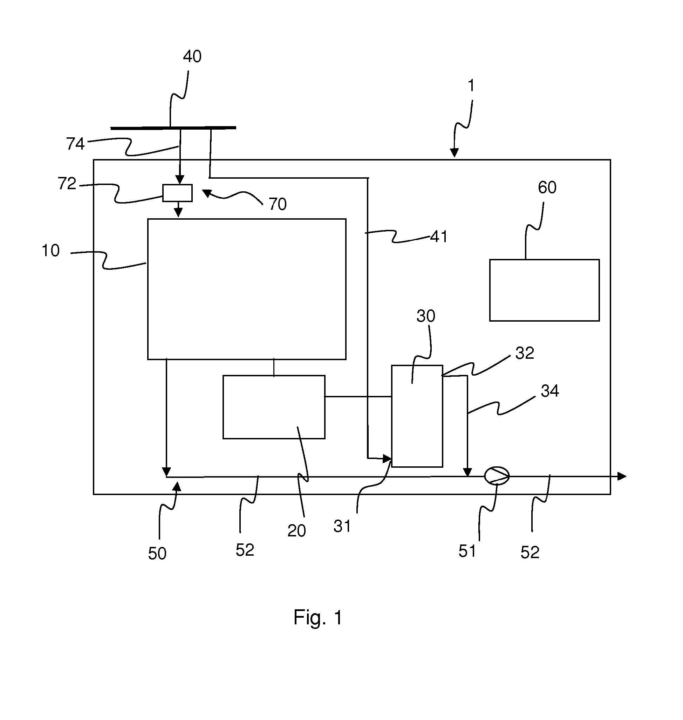

Figure 1 shows a washing machine 1 according to the invention, comprising a chamber 10 for treating goods, a tank 30 adapted to contain a liquid, a heat pump 20 adapted to heat water to be used in the chamber 10 and to absorb heat from the liquid contained in the tank 30.

The washing machine also comprises a water outlet circuit 50 for discharging waste water (i.e. used water optionally mixed with washing products) from the chamber 10 after process cycles (e.g., washing, rinsing cycles).

The water outlet circuit 50 can comprise a draining pump 51 and draining pipes 52.

The water outlet circuit 50 is advantageously fluidly connected to the bottom of the chamber 10.

The tank 30 can be thermally coupled to the water outlet circuit 50 in order to transfer heat from waste water flowing through the pipes 52 into the liquid contained in the tank 30. For example, thermal coupling can be achieved by placing the draining pipes 52 in contact with the tank 30.

In addition or in alterative, the tank 30 can be thermally coupled to electronic components and heated elements inside the machine (not shown, as for example compressor, motor, inside air). The thermal energy released by these components can be transferred to the liquid in the tank 30 for example by natural convection, forced convection or conduction.

The washing machine 1 advantageously further comprises a water inlet circuit 70 adapted to supply water, that can be optionally mixed with washing products, into the chamber 10. The water inlet circuit 70 advantageously comprises a drawer 72 and water inlet pipes 74.

The water inlet pipes 74 fluidly connect water mains 40 to the chamber 10 via the drawer 72.

The drawer 72 is adapted to be filled with products, for example detersives, softener, bleaching, sparkling/rinse aid substances, etc. The drawer 72 can comprise one or more compartments (not shown) for one or more products from which a certain amount of these products, depending on the washing program, is delivered into the chamber 10.

According to the invention, the tank 30 has an input 31 which is directly fluidly connected to public water mains 40 in order to be able to directly receive tap water from it. The input 31 and the water mains 40 are suitably connected to each other through a tap water conduit 41, which is adapted to supply tap water from the water mains 40 to the tank 30 bypassing the chamber 10 (that is without making the tap water to pass through the chamber 10).

In this way, the tank 30 is advantageously free of fluid connection with waste water from the chamber 10.

The tap water conduit 41 can comprise one or more pipes suitably connected to each other.

In the embodiment shown in the figures, the tank 30 has an output 32 fluidly connected to the water outlet circuit 50 in order to drain away cooled liquid from the tank 30 via the water outlet circuit 50. The output 32 and the water outlet circuit 50 are suitably connected through pipes 34.

The liquid contained in the tank 30 advantageously is tap water.

The tank 30 is advantageously positioned on a bottom region of the washing machine 1.

The amount of liquid contained in the tank 30 and the volume of the tank 30 depends on the amount of water that must be heated up during a process cycle of the washing machine 1, the temperature required for the water, and the percentage of frozen liquid in the tank 30.

As explained in more detail below, in some advantageous embodiments of the invention, wherein cooled/iced liquid regeneration is performed during operation of the heat pump 20, the heat pump efficiency is improved and ice formation in the tank 30 is reduced so that the size of the tank 30 can be reduced.

During operation of the heat pump 20, the liquid in the tank 30 can be moved by a pump or impeller (not shown) in order to increase the heat transfer coefficient.

The washing machine suitably comprises a control unit 60 configured to control operation of the washing machine 1.

When the washing machine 1 is turned on in order to perform a predetermined washing program, the control unit 60 is advantageously configured to switch the heat pump 20 on any time water has to be heated into the chamber 10 in order to perform a process cycle (e.g., washing, rinsing, and similar) of the predetermined washing program.

The control unit 60 is also advantageously configured to switch the heat pump 20 off when the water in the chamber 10 reaches a desired process temperature or when the liquid in the tank reaches a predetermined condition (for example, when it is in large part iced).

The liquid in the tank 30 exchanges sensible heat during a cooling phase of the liquid and latent heat during an icing phase (if any). The exploitation of the latent heat allows reducing the amount of liquid required and therefore the overall dimensions of the tank 30. Accordingly, the control unit 60 is advantageously configured to operate the heat pump 20 so that the liquid in the tank 30 is at least partially freezed.

Depending on the program design, heat pump power, and wash temperature, the heat pump 20 alone might be insufficient to heat up the water to the desired process temperature in the available time. Therefore, a conventional electrical heater (not shown) may be comprised in the washing machine 1 as well. The conventional electrical heater can be suitably positioned on the bottom of the chamber 10.

As stated above, during operation of the heat pump 20 (that is while the compressor is switched-on), the liquid in the tank 30 is cooled down with respect to a starting temperature and, optionally, at least partially iced. The cooled/iced liquid needs to be regenerated, that is warmed up/melted towards the starting temperature, in order to be used again as energy source to the heat pump 20 in a next, optionally immediately subsequent, washing cycle.

The control unit 60 is advantageously configured to carry out the method of cooled/iced liquid regeneration according to the invention.

According to this method, cooled/iced liquid regeneration in the tank 30 is performed by using tap water directly from the water mains 40 bypassing the chamber 10.

Suitably, the control unit 60 is configured to control start/stop of tap water entry from the water mains 40 and start/stop of cooled water exit to the water outlet circuit 50. This, with the purpose of melting any ice formation in the tank 30 and replacing at least part of the cooled liquid with tap water at a higher temperature. Indeed, temperature of "cold" tap water can range from about 15 to 20 °C, depending on the washing machine location (e.g. indoor or outdoor) and on the external ambient temperature. In addition, temperature of hot tap water can range from about 30 to 50 °C.

Starting/stopping tap water entry into the tank 30 can be performed by the control unit 60 by opening/closing at least a suitable valve (not shown) associated with the input 31 of the tank 30.

Starting/stopping cooled water exit from the tank 30 can be performed by the control unit 60 by opening/closing at least a suitable valve (not shown) associated with the output 32 of the tank 30 and switching on/off the draining pump 51.

The control unit 60 can be configured to manage cooled/iced liquid regeneration in the tank 30 according to a predefined regeneration time and/or in cooperation with a suitable sensor (not shown) in the tank 30. For example, the control unit 60 can be configured to enable tap water entry and cooled water exit into/from the tank 30 for a predefined regeneration time or till a predetermined water temperature (detected by means of said sensor) is reached in the tank 30. The sensor could be a temperature sensor or a sensor adapted to detect a degree of icing. According to another example, the control unit 60 can be configured so to enable a predetermined amount of tap water to enter and to exit into/from the tank 30.

The control unit 60 can be configured so that cooled/iced liquid regeneration in the tank 30 is performed during operation of the heat pump 20 (that is, when the compressor is switched-on) or after the heat pump 20 (that is, the compressor) is switched off, at the end of an operation cycle of the heat pump 20.

According to a preferred embodiment, the control unit 60 is configured so that cooled/iced liquid regeneration in the tank 30 is performed during operation of the heat pump 20, within an operation cycle of the same, preferably some time before the end of the operation cycle. For example, cooled/iced liquid regeneration is performed at an intermediate time between a starting time and an ending time of the operation cycle of the heat pump 20. As stated above, this is advantageous because it enables to improve the heat pump efficiency, to reduce ice formation and to reduce the size of the tank 30. In addition, by eliminating the need of performing cooled/iced liquid regeneration after the heat pump is switched off, it enables to perform subsequent heat pump operation cycles, one immediately after the other.

Said intermediate time can be predefined by the washine machine manufacturer or can be identified in cooperation with a suitable sensor. For example, said intermediate time can correspond to a predetermined degree of ice formation in the tank.

The control unit can be configured so that cooled/iced liquid regeneration in the tank 30 is performed once or more times during a same operation cycle.

The washing machine 1 can be a washing machine or a washing-drying machine.

The washing machine 1 can be a dish washer or a laundry washer.

In the case of laundry washer the chamber 10 can be a drum, optionally perforated, which is rotatably contained in a tub (not shown).

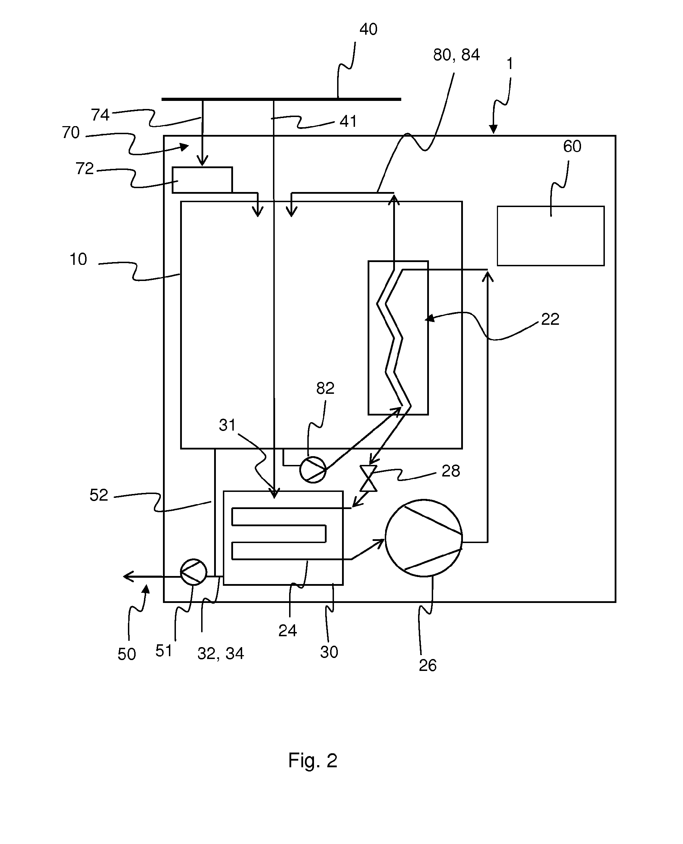

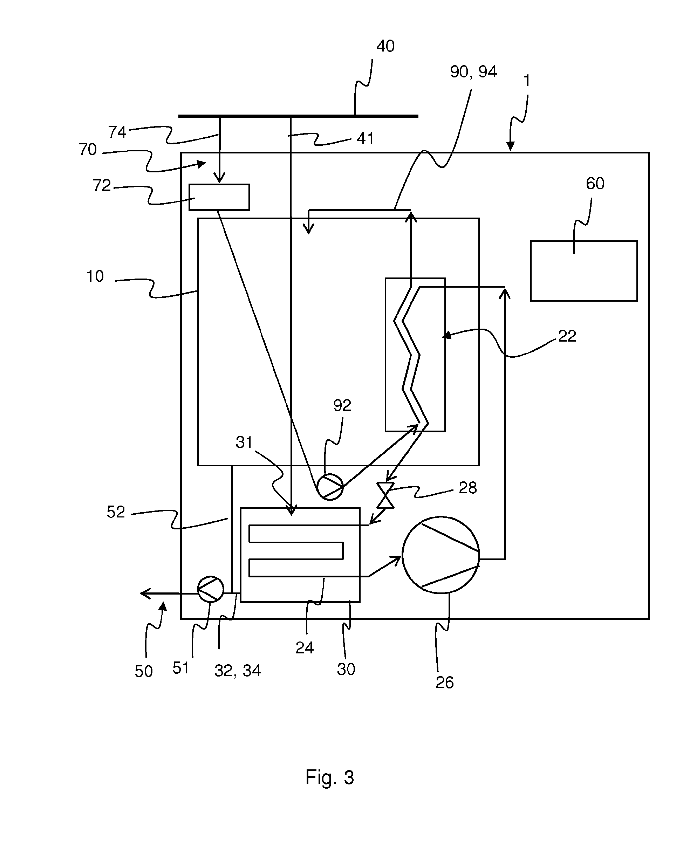

As shown in figures 2 and 3, the heat pump 20 can suitably comprise a condenser 22, an evaporator 24, a compressor 26 and a pressure lowering device 28, such as an expansion valve.

The condenser 22, the evaporator 24, the compressor 26 and the pressure lowering device 28 form as a whole a closed conduit 21 filled with a heat transfer fluid, such as a refrigerant. During operation of the heat pump 20 (that is, when the compressor 26 is switched-on), heat is generated at the condenser 22 and cold is generated at the evaporator 24.

The heat transfer fluid is pumped from the compressor 26 to the condenser 22, where liquefaction takes place accompanied by release of heat. The released heat is used to warm water to be used in the chamber 20. From the condenser 22 the heat transfer fluid passes via the pressure lowering device 28 to the evaporator 24 where the heat transfer fluid evaporates whilst absorbing heat from the liquid contained in the tank 30. From the evaporator 24 the heat transfer fluid runs back to the compressor 26.

The evaporator 24 can comprise a pipe or a series of pipes properly shaped and immersed in the liquid contained in the tank 30.

Considering that during operation of the heat pump 20, ice (if any) is inclined to builds up around the evaporator 24, the input 31 and the output 32 of the tank 30 are preferably positioned sufficiently far apart from the evaporator 24 so as to prevent any obstruction of the input 31 and output 32 due to ice formation.

The condenser 22 can be located within the chamber 10, preferably on a bottom region, or outside the chamber 10.

The condenser 22 is advantageously arranged so as to be able to heat the water to be used in the chamber 10.

The condenser 22 can be a tube-in-tube heat exchanger, a plate heat exchanger or similar. The water to be used in the chamber 10 is made to flow through the condenser 22 so that it exhanges energy with the refrigerant by forced convention. The water can be continuously recirculated by a pump through the condenser 22 and back to the chamber 10 until the desired temperature is reached or tap water can be heated directly, by flowing through the condenser 22, before entering into the chamber 10.

Figure 2 shows an embodiment of the washing machine 1 of figure 1 wherein the water is continuously recirculated through the condenser 22 and back to the chamber 10, until the desired temperature is reached, by means of a water circuit 80.

The water circuit 80 is a recirculation circuit adapted to drain water from the chamber 10 (for example from the bottom) and to return it back into the chamber 10 at another location (for example at an upper location) via the condenser 22. Suitably, the water circuit 80 comprises a pump 82 and pipes 84 fluidly connected to the condenser 22.

In the embodiment of figure 2, the condenser 22 is positioned inside the chamber 10.

Figure 3 shows another embodiment of the washing machine 1 of figure 1 wherein tap water is heated by the condenser 22 before entering into the chamber 10.

In the embodiment of figure 3, the washing machine 1 comprises a water circuit 90.

The water circuit 90 comprises a pump 92 and pipes 94 adapted to directly drain tap water from the water mains 40 bypassing the chamber 10, to conduct the tap water through the condenser 22 and then into the chamber 10, without recirculation. In order to guaranee that the desired process temperature is reached, the heat exchanger 22 and the flow rate of the water should be suitably sized. In this embodiment, the condenser 22 operates without being in contact with waste water.

## Claims

1. Wasing machine (1) comprising
- a chamber (10) for receiving goods to be washed,
- a tank (30) adapted to contain a liquid,
- a heat pump (20) comprising a first heat exchanger (22), a second heat exchanger (24), a compressor (26) and a pressure lowering device (28) forming a circuit comprising a heat transfer fluid, the first heat exchanger (22) being adapted to cool said heat transfer fluid and to heat water to be used in the chamber (10), the second heat exchanger (24) being adapted to heat said heat transfer fluid and to cool the liquid contained in the tank (30),
**characterized in that** the tank (30) is fluidly connected to water mains (40) by means of a conduit configured so as to supply tap water from the water mains (40) to the tank (30) bypassing the chamber (10).

2. Wasing machine (1) according to claim 1, further comprising a control unit (60) configured to manage liquid regeneration in the tank (30) by managing entry of tap water from the water mains (40) and exit of at least part of the liquid cooled by the second heat exchanger (24).

3. Wasing machine (1) according to claim 2, wherein the control unit (60) is configured to manage liquid regeneration in the tank (30) so that liquid regeneration is performed during operation of the heat pump (20).

4. Wasing machine (1) according to claim 1, further comprising a water outlet circuit (50) for discharging waste water from the chamber (10).

5. Wasing machine (1) according to claim 4, wherein the tank (30) is thermally coupled to the water outlet circuit (50).

6. Wasing machine (1) according to claim 1, wherein the tank (30) has an output (32) for draining away at least part of cooled liquid from the tank (30).

7. Wasing machine (1) according to claim 4, wherein the tank (30) has an output (32) fluidly connected to the water outlet circuit (50) for draining away at least part of cooled liquid from the tank (30) via the water outlet circuit (50).

8. Method of liquid regeneration in a washing machine (1) comprising a chamber for receiving goods to be washed, a liquid tank (30), and a heat pump (20) comprising a first heat exchanger (22), a second heat exchanger (24), a compressor (26) and a pressure lowering device (28) forming a circuit comprising a heat transfer fluid, the method comprising:
- operating the heat pump (20) so as to cool said heat transfer fluid and to heat water to be used in the chamber (10) by means of said first heat exchanger (22), and to heat said heat transfer fluid and to cool the liquid contained in the tank (30) by means of the second heat exchanger (24),
- regenerating the liquid contained in the tank (30), cooled during operation of the heat pump (20), by supplying to the tank (30) tap water from water mains (40) bypassing the chamber (10).

9. Method according to claim 8, wherein regenerating the liquid contained in the tank (30) comprises draining away at least part of the liquid cooled during operation of the heat pump (20).

10. Method according to claim 8, wherein the heat pump (20) is switched off at the end of an operation cycle of the heat pump (20).

11. Method according to claim 8, wherein the heat pump (20) is operated till a desired temperature is reached for the water to be used in the chamber (10).

12. Method according to claim 8, wherein the heat pump (20) is operated till the liquid in the tank reaches a predetermined condition.

13. Method according to claim 8, wherein the heat pump (20) is operated for a predetermined operation time.

14. Method according to claim 8, wherein regenerating the liquid contained in the tank (30) is performed while operating the heat pump (20).

15. Method according to claim 8, wherein regenerating the liquid contained in the tank (30) is performed while the heat pump (20) is switched off.
